# EUROPÄISCHE PATENTSCHRIFT

(11) **EP 2 683 503 B1**
(45) Veröffentlichungstag und Bekanntmachung des Hinweises auf die Patenterteilung: **29.07.2020**
(21) Anmeldenummer: 12711763.8
(22) Anmeldetag: 09.03.2012
(51) Int. Cl.: B21D 5/02

(54) **VERFAHREN UND VORRICHTUNG ZUM WINKELGENAUEN ABKANTEN ODER BIEGEN VON BLECHEN**
METHOD AND DEVICE FOR ANGLE-PRECISE EDGING OR BENDING OF SHEET METAL PLATES
PROCÉDÉ ET DISPOSITIF DE PLIAGE DE TÔLES À PRÉCISION ANGULAIRE

(30) Priorität: 11.03.2011 DE 102011013701
(43) Veröffentlichungstag der Anmeldung: 15.01.2014
(73) Patentinhaber: TRUMPF Maschinen Austria GmbH & Co. KG., 4061 Pasching (AT)
(72) Erfinder: FINGER, Jean, F-67860 Rhinau (FR)
(74) Vertreter: Burger, Hannes
(86) Internationale Anmeldenummer: PCT/EP2012/001066
(87) Internationale Veröffentlichungsnummer: WO 2012/123092

(56) Entgegenhaltungen:
- DE-A1- 10 009 074
- DE-A1-102006 050 687
- DE-B3-102007 056 827
- US-A- 5 857 366

## Beschreibung

Die vorliegende Erfindung betrifft ein Verfahren zum winkelgenauen Abkanten oder Biegen von Blechen mit den Merkmalen des Anspruchs 1. Die Erfindung betrifft auch eine Vorrichtung zum Durchführen eines Verfahrens zum winkelgenauen Abkanten oder Biegen von Blechen.

Das Herstellen exakter vorgegebener Biegewinkel beim Abkanten oder Biegen von Blechen ist ein relativ aufwändiges Verfahren, wobei der einzustellende Weg eines Abkantstempels einer Abkantmaschine zur Erzeugung eines bestimmten Winkels sowohl vom Material des Bleches, der Blechdicke als auch von der relativen Lage der Biegerichtung bezüglich der Walzrichtung des Bleches abhängt. Darüber hinaus federt bei einem Biegeverfahren das biegeverformte Werkstück beim Nachlassen oder Beenden der Biegeverformung durch Entlastung des Werkstückes von der Biegekraft aufgrund der Elastizität des Werkstoffes zurück, wobei sich der Biegewinkel zusätzlich verändert. Je nachdem wie groß die Abweichung des tatsächlich erreichten Biegewinkels vom vorgegebenen Biegewinkel ist, muss eine Korrekturbiegung durchgeführt werden. Dazu wird der tatsächlich erreichte Biegewinkel vermessen und anschließend wird das Blechteil mit Korrekturparametern nochmals entsprechend der Differenz zwischen dem bereits erzielten Winkel und dem gewünschten Winkel nachgebogen. Bei der durchzuführenden Winkelmessung handelt es sich um einen aufwändigen Prozess, der auf unterschiedliche Weise durchgeführt werden kann.

Bei einer apparativ wenig, aber umso mehr zeitaufwändigen Methode wird das Blechteil der Biegevorrichtung entnommen und mit Hilfe eines Winkelmessers nachgemessen. Anschließend wird das Blechteil wieder in die Maschine eingelegt und entsprechend der Differenz zwischen dem gemessenen Winkel und dem vorgegebenen Winkel nachgearbeitet.

Die DE 100 09 074 A1 offenbart einen Gegenstand gemäß dem Oberbegriff des Anspruch 12. In der DE 100 09 074 A1 wird ein Verfahren zum Frei- oder Schwenkbiegen eines Werkstückes sowie eine Vorrichtung zur Ermittlung der Lage eines Werkstückschenkels beim Biegen beschrieben. In diesem Fall wird der entstandene Biegewinkel mit Hilfe eines optischen Messstrahls bestimmt, der auf den oder die hinsichtlich der Winkelstellung zu kontrollierenden Werkstückschenkel gerichtet wird und als Lichtebene oder Lichtbündel so gestaltet ist, dass auf dem Werkstück oder Werkstückschenkel eine Lichtlinie oder Lichtstrecke erzeugt wird. Die vom Biegewinkel abhängige Lage des Auftreffortes auf den Werkstückschenkel wird mittels einer Kamera erfasst und aus der Änderung der Lage des Auftreffortes kann die Winkeländerung bestimmt werden.

Aus der DE 10 2006 050 687 B4 ist ein Verfahren zur Messung und/oder Korrektur der Werkstückform nach dem Umformen durch Biegen bekannt, wobei ein erster Abschnitt des Werkstücks fest eingespannt, ein zweiter Abschnitt um eine Biegekante gebogen wird und ein gerader an die Biegung anschließender Teil des zweiten Abschnitts nach dem Biegevorgang bezüglich seiner Lage zum ersten Abschnitt vermessen wird. Dabei werden im Bereich des geraden Teils des zweiten Abschnitts des Werkstücks wenigstens zwei Messpunkte mit unterschiedlichem Abstand zur Biegekante ermittelt, durch deren Verbindungsgerade sich der tatsächliche Biegewinkel ergibt, wobei die Differenz zwischen dem gemessenem tatsächlichen Biegewinkel und einem vorgegebenem Biegewinkel der Berechnung des Verformungsweges für einen nachfolgenden finalen oder iterativen Biegevorgang zugrunde gelegt wird.

In der DE 10 2007 056 827 B3 wird ein Controller für eine Biegemaschine beschrieben, der Schnittstellen zu einem oder mehreren lasergestützten Biegewinkelmessgeräten aufweist und mit einem oder mehreren Kraftmessgeräten kommunizieren kann. Der Controller kann anhand von Konstruktionsdaten und/oder Werkstückdaten für die zu biegenden Teile Parameter zum Steuern der Biegemaschine, Sollwerte für die Winkel der zu biegenden Teile und Positionsdaten für eine oder mehrere lasergestützte Biegewinkelmessgeräte berechnen. Anhand von Istwerten von einem oder mehreren lasergestützten Biegewinkelmessgeräten und von einem oder mehreren Kraftmessgeräten kann der Controller die Parameter zum Steuern der Biegemaschine korrigieren, bis eine Übereinstimmung zwischen den Sollwerten und den Istwerten vorliegt. Vorzugsweise ist dieser Controller Teil eines vollautomatischen Biegesystems.

Alle vorgenannten Verfahren haben den Nachteil, dass zumindest zu Beginn einer neuen Produktionsserie nach jedem Abkanten oder Biegen die Biegewinkel kontrolliert und gegebenenfalls eine oder mehrere Korrekturbiegungen durchgeführt werden müssen. Insbesondere wenn Bleche mit schwankender Qualität eingesetzt werden, müssen auch während der Produktionsserie häufige Kontrollmessungen durchgeführt werden.

Dabei erfolgt die Winkelbestimmung bei einer halbautomatischen Maschine durch Herausnehmen des Werkstückes aus der Maschine und anschließende Vermessung des erzeugten Winkels mit Hilfe eines Winkelmessers durch den Maschinenführer. Sollte die Differenz zwischen dem erzeugten Winkel und dem vorgegebenen Winkel außerhalb der vorgegebenen Toleranz liegen, wird das Werkstück nochmals in die Maschine eingelegt und auf den gewünschten Winkel nachgebogen. Das Verfahren ist nicht nur zeitaufwändig, sondern beinhaltet auch das Problem, dass das Werkstück von der Biegemaschine an exakt der gleichen Stelle erfasst werden muss, um korrekt nachgearbeitet zu werden, woraus sich eine zusätzliche potentielle Fehlerquelle für die Korrekturbiegung ergibt.

Moderne vollautomatische Maschinen zum winkelgenauen Abkanten oder Biegen von Blechen besitzen häufig eines oder mehrere integrierte Winkelmessgeräte, mit deren Hilfe nach dem Biegevorgang automatisch der erzielte Winkel bestimmt wird, wobei dann bei zu großen Abweichungen vom Sollwert eine oder mehrere anschließende Korrekturbiegungen durchgeführt werden. Diese Vorgehensweise ist apparativ aufwändig und teuer und schränkt vor allem die Maschinenkapazität ein, insbesondere dann wenn beispielsweise bei Maßungenauigkeiten aufgrund schwankender Blechqualität noch zusätzliche Korrekturbiegevorgänge eingeleitet werden müssen, die entsprechende Maschinenzeit beanspruchen.

Alle aktuellen Systeme haben den Nachteil, dass die Kontrollmessung während des Kantvorgangs erfolgt, wobei dann die Kantmaschine blockiert ist, so dass Maschinenzeit für die Produktion verlorengeht und die Maschinenkapazität eingeschränkt wird.

Aufgabe der vorliegenden Erfindung ist es, ein Verfahren zum winkelgenauen Abkanten oder Biegen von Blechen zur Verfügung zu stellen, das Vorteile gegenüber dem Stand der Technik hat. Aufgabe der vorliegenden Erfindung ist es auch, eine Vorrichtung zur Durchführung des erfindungsgemäßen Verfahrens zur Verfügung bereitzustellen.

Gelöst wird die Aufgabe durch ein Verfahren mit den Merkmalen des Anspruchs 1 sowie eine Vorrichtung mit den Merkmalen des Anspruchs 12. Vorteilhafte Ausgestaltungen und Weiterentwicklungen der vorliegenden Erfindung sind Gegenstand der entsprechenden Unteransprüche.

Die Erfindung basiert auf der Erkenntnis, dass Winkelungenauigkeiten beim Abkanten oder Biegen von Blechen meistens auf die schwankende Blechqualität zurückzuführen sind. So wurde festgestellt, dass die Maßhaltigkeit beim vorgegebener Blechsorte und Walzrichtung wesentlich von der Stärke des Bleches abhängt und dass die Winkelabweichung mit dem Gewicht des Bleches bzw. der Stärke des Bleches korreliert.

Daraus wurde gefolgert, dass durch Auswiegen des Bleches vor dem Abkanten oder Biegen, anschließendes Vermessen und gegebenenfalls anschließender Korrektur des Biegewinkels an wenigen frei ausgewählten Vergleichsblechen Daten gesammelt werden können, mit deren Hilfe die Maschine so eingerichtet bzw. programmiert werden kann, dass sich die Maschinenparameter selbsttätig im laufenden Serienprozess in Korrelation zum Gewicht des zu bearbeitenden Bleches anpassen, so dass ohne zusätzliche Korrekturbiegungen exakte Winkel erzielt werden, wenn das Gewicht des zu bearbeitenden Bleches vor dem Biegevorgang bestimmt wurde.

Diese Vorgehensweise ist bedeutend weniger aufwändig als die bisher bekannten Korrekturverfahren und hat den zusätzlichen Vorteil, dass Maschinenkapazität gewonnen wird, da nach dem Einstellen bzw. Programmieren der Maschinen auf einen definierten Umformvorgang mit einem anhand von wenigen Blechen ermitteltem Korrekturfaktor oder Korrekturprogramm, bei dem vor allem die Relation des Gewichtes des Bleches zum erzielten Biegewinkel eingeht, im Wesentlichen keine zusätzlichen Korrekturarbeitsgänge mehr erforderlich sind, um die gewünschte Winkelgenauigkeit nicht nur zu erhalten, sondern auch innerhalb einer Serienproduktion zu garantieren. Wie bei jeder größeren Produktionsserie sind dann nur noch die aus Gründen der Qualitätssicherheit üblichen gelegentlichen Kontrollmessungen durchzuführen, deren Häufigkeit insbesondere bei dem erfindungsgemäßen Verfahren, bei dem durch die vorgeschaltete Gewichtsmessung eine zusätzliche Qualitätssicherung erzielt wird, im Verlauf einer Produktionsserie drastisch zurückgeht. Im Idealfall werden die Kontrollmessungen im Verlauf einer Produktionsserie überflüssig.

Neben dem Gewicht beeinflusst auch die Walzrichtung des Bleches den Biegewinkel, so dass das oben geschilderte Korrekturverfahren neu initiiert werden muss, wenn sich die Walzrichtung der zu bearbeitenden Bleche ändert. In der Praxis kann man sich damit behelfen, dass man Blechserien mit unterschiedlicher Walzrichtung getrennt verarbeitet. Im einfachsten Fall separiert der Maschinenführer vor der Produktionsserie Blechserien mit unterschiedlicher Walzrichtung, die optisch anhand ihrer Walzspuren identifiziert werden können.

Das Verfahren zum winkelgenauen Abkanten oder Biegen von Blechen wird auf einer konventionellen CNC-gesteuerten Maschine zur Blechbearbeitung durchgeführt, wobei zunächst in einem ersten Schritt ein erstes zu bearbeitendes Blech vor dem Abkanten oder Biegen ausgewogen wird. Anschließend erfolgt das Abkanten oder Biegen des Bleches unter Verwendung vorgegebener Maschinenparameter. Dann wird der Biegewinkel bestimmt und der für den Biegewinkel gefundene Wert wird zusammen mit den vorgegebenen Maschinenparametern, dem Gewicht des Bleches und gegebenenfalls der Walzrichtung des Bleches in Relation zu einem vorgegebenen Biegewinkel in das Steuerprogramm der Maschine eingegeben oder von diesem übernommen, um daraus korrigierte Maschinenparameter für eine Korrekturbiegung zu bestimmen. Diese Schritte werden vorzugsweise mit mindestens einem weiteren Blech durchgeführt, das idealerweise ein unterschiedliches Gewicht aufweisen sollte.

Anhand der gemessenen Biegewinkel wird nun in Abhängigkeit von den Gewichten der jeweiligen Bleche ein Korrekturfaktor bzw. ein Korrekturprogramm für den Abkant- oder Biegevorgang bestimmt, wobei die Differenz zwischen dem gemessenen tatsächlichen Biegewinkel und dem vorgegebenen Biegewinkel der Berechnung des Verformungsweges für einen nachfolgenden Biegevorgang in einer Serienfertigung zugrunde gelegt wird. Sobald der Korrekturfaktor bzw. das Korrekturprogramm bestimmt ist, kann die Serienfertigung von abgekanteten oder gebogenen Blechteilen erfolgen, wobei die zu bearbeitende Bleche immer zunächst gewogen und anschließend unter Heranziehung des ermittelten Korrekturfaktors bzw. Korrekturprogramms winkelgenau abgekantet oder gebogen werden.

Das erfindungsgemäße Verfahren ist besonders geeignet für das sogenannte Freibiegen von Blechen, wobei der Biegewinkel durch die Matrizeneinlaufkanten und die Spitze des Abkantstempels gebildet wird. Dabei bestimmt die Eintauchtiefe der Stempelspitze in die Matrize den Biegewinkel. Die Korrektur des Biegewinkels erfolgt durch die Veränderung der Eintauchtiefe der Stempelspitze in die Matrize. Der besondere Vorteil des Freibiegens ist darin zu sehen, dass mit einem Werkzeugsatz beliebige Biegewinkel gebogen werden können. Ein Nachteil des Freibiegens besteht in der mangelnden Präzision aufgrund von Blechtoleranzen, was durch das erfindungsgemäße Verfahren nun jedoch weitgehend ausgeglichen werden kann.

Bei einer vorteilhaften Ausgestaltung des erfindungsgemäßen Verfahrens ist vorgesehen, dass nach der Winkelmessung der Vergleichsbleche und der anschließenden Bestimmung der Maschinenparameter für eine Korrekturbiegung auch eine entsprechende Korrekturbiegung durchgeführt wird und die bei der Korrekturbiegung ermittelten Biegewinkel zusammen mit den bei der Korrekturbiegung eingestellten Maschinenparametern mit zur Bestimmung des Korrekturfaktors bzw. Korrekturprogramms herangezogen werden.

Der besondere Vorteil des Verfahrens beruht darauf, dass die bei einer Serienfertigung aus Qualitätssicherungsgründen häufig durchzuführenden Kontrollmessungen der Winkel überflüssig werden. Es wurde gefunden, dass die Maschinenparameter mit Hilfe von vorher ermittelten Korrekturfaktoren automatisch so eingestellt werden können, dass die in einem ersten Arbeitsgang erhaltenen Biegewinkel mit hoher Sicherheit innerhalb der vorgegebenen Toleranz für den angestrebten Wert liegen. Zur Erhöhung der Prozesssicherheit können zusätzlich stichprobenartige Kontrollmessungen des Biegewinkels durchgeführt werden.

Die Messung des Biegewinkels selber kann mit den üblichen Messvorrichtungen erfolgen. So kann im einfachsten Fall ein konventioneller manuell zu betätigender Winkelmesser eingesetzt werden.

Selbstverständlich kann auch gemäß einer weniger personalaufwändigen Ausgestaltung des vorliegenden Verfahrens die Winkelmessung mit Hilfe von in die Biegemaschine integrierten oder mit ihr kombinierten Messsystemen durchgeführt werden, wobei die Winkelmessung mit Hilfe eines optischen Messstrahls, über Abstandssensoren oder mit Hilfe von lasergestützten Biegewinkelmessgeräten erfolgen kann. Hierzu ist jedoch anzumerken, dass integrierte Winkelmessgeräte relativ teuer sind und gerade durch das erfindungsgemäße Verfahren die Zahl der zur Qualitätssicherung erforderlichen Winkelmessungen drastisch reduziert wird, so dass eine derartige Kombination eher für Spezialfälle in Frage kommt.

Die in den Vorversuchen ermittelten Werte und Maschinenparameter werden bevorzugt in ein Steuerprogramm für ein vollautomatisches Biegesystem eingegeben bzw. von diesem übernommen und die Bestimmung des Korrekturfaktors bzw. Korrekturprogramms erfolgt über das Steuerprogramm, wobei das Steuerprogramm vorteilhaft Teil der Maschinensteuerung der CNC-gesteuerten Maschine zur Blechbearbeitung ist.

Die Vorteile des erfindungsgemäßen Verfahrens kommen besonders dann zum Tragen, wenn in die CNC-gesteuerte Maschine zur Blechbearbeitung eine Waage integriert ist, die direkt mit dem Steuerprogramm verbunden ist und mit diesem kommuniziert. Für eine vollautomatische Verarbeitung von Blechen bietet es sich an, die Waage im Bereich der Zuführung der Bleche anzuordnen, wobei diese dann beispielsweise über einen mit integrierter Waage ausgerüsteten Roboter erfolgen kann.

Gegenstand der vorliegenden Erfindung ist auch eine Vorrichtung zum winkelgenauen Abkanten oder Biegen von Blechen, wobei die Vorrichtung eine konventionelle CNC-gesteuerte Maschine zur Blechbearbeitung ist, die ein Steuerprogramm zur Steuerung der Maschine umfasst, das in der Lage ist, anhand von Daten von vergleichenden Gewichts- und Winkelmessungen an mindestens einem zu bearbeitendem Blech einen Korrekturfaktor bzw. ein Korrekturprogramm für ein winkelgenaues Abkanten oder Biegen von Blechen für eine Serienfertigung zu bestimmen.

Eine bevorzugte Ausgestaltung der Vorrichtung zum winkelgenauen Abkanten oder Biegen von Blechen sieht vor, dass die Vorrichtung eine Waage umfasst, die mit dem Steuerprogramm zu Steuerung der Maschine verbunden ist und direkt mit diesem kommuniziert. Nachdem das Gewicht des Bleches erfasst ist, wird das Blech gebogen und der erhaltene Biegewinkel wird vorzugsweise manuell mit Hilfe eines Winkelmessgerätes bestimmt. Anhand des Gewichts des Bleches und des erzielten Biegewinkels wird der Korrekturfaktor bestimmt. Zu Ermittlung des Korrekturfaktors können mehrere Bleche vermessen werden. Nachdem der Korrekturfaktor bestimmt ist, sind keine weiteren Winkelmessungen mehr erforderlich und es kann eine Serienfertigung erfolgen, wobei dann allenfalls aus Gründen der Qualitätssicherung stichprobenartig Winkelmessungen durchgeführt werden können.

Die Vorrichtung kann gegebenenfalls zusätzlich ein Winkelmessgerät umfassen, das zusammen mit der Waage mit dem Steuerprogramm zur Steuerung der Maschine verbunden ist und mit diesem kommuniziert. Das Steuerprogramm ist dann in der Lage, anhand von vergleichenden Gewichts- und Winkelmessungen an vorzugsweise mindestens zwei unterschiedliche Gewichte aufweisenden Blechen einen Korrekturfaktor bzw. ein Korrekturprogramm für eine Serienfertigung zu bestimmen.

An dieser Stelle soll noch einmal darauf hingewiesen werden, dass nicht nur das Gewicht, sondern auch die Walzrichtung des Bleches einen Einfluss auf den Biegewinkel hat. Vor dem Beginn einer Produktionsserie müssen daher die zu biegenden Bleche nach ihrer Walzrichtung sortiert werden. Diese Sortierung erfolgt praktischerweise nach dem Schneiden der Bleche. Die entsprechenden Korrekturfaktoren und Korrekturprogramme müssen für Bleche unterschiedlicher Walzrichtung gesondert ermittelt werden. Üblicherweise erfolgt diese Sortierung durch den Maschinenführer, da eine automatische optische Erfassung der Bleche mit unterschiedlicher Walzrichtung bisher noch nicht möglich ist.

Im Folgenden wird die vorliegende Erfindung anhand einer Zeichnung und anhand von Beispielen näher erläutert.

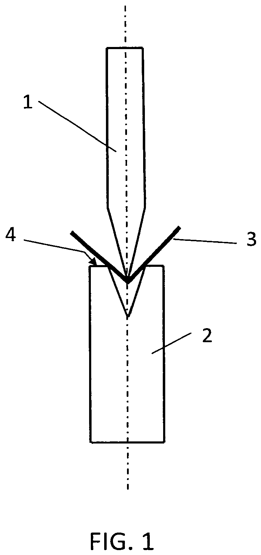

Die Figur 1 zeigt in einem Schnittbild eine schematische Darstellung des Freibiegens, bei dem der Biegewinkel des Bleches 3 durch die Einlaufkanten 4 der Matrize 2 sowie die Spitze des Abkantstempels 1 gebildet wird.

Die folgenden Beispiele beziehen sich auf das Freibiegen.

### Beispiel 1

Mittels einer CNC-gesteuerten hydraulischen Abkantpresse mit einer Presskraft von 500 bis 10.000 kN wurden Verkleidungsteile aus Stahlblech abgekantet. Der vorgegebene Kantwinkel betrug 90°. Das Blech hatte eine Dicke von ca. 3 mm. Im freien Biegen, wobei Bleche mit gleicher Walzrichtung eingesetzt wurden, wurden die in der folgenden Tabelle aufgeführten Biegewinkel ermittelt:

**Tabelle 1**

| Werkstück | Gewicht (g) | Winkel (°) |
|---|---|---|
| Blech 1 | 200 | 90 |
| Blech 2 | 195 | 91 |
| Blech 3 | 215 | 87 |

Anhand der in der obigen Tabelle aufgeführten Ergebnisse der Gewichts- und Winkelmessungen und der ermittelten Differenz des Istwertes zum Sollwert des Biegewinkels in Abhängigkeit vom Gewicht des Bleches kann ein Korrekturfaktor ermittelt werden, so dass durch gezieltes Überbiegen oder Unterbiegen des Bleches die unterschiedliche Blechdicken und die zu erwartende Rückfederung ausgeglichen werden können. Im vorliegenden einfachen Beispielsfall ist pro 5 g Gewicht eine Winkelkorrektur von 1 ° erforderlich. Im Rahmen der Korrektur wird der Weg des Abkantstempels der Blechdicke angepasst. Bei höherem Gewicht (= dickeres Blech) muss der Weg reduziert werden, um den Sollwinkel zu erreichen.

### Beispiele 2 bis 5

In der folgenden Tabelle 2 sind weitere Beispiele zusammengefasst, die unter den gleichen Bedingungen verarbeitet wurden.

**Tabelle 2**

| Beispiel | Material Stärke | Blech 1 | | Blech 2 | | Blech 3 | |
|---|---|---|---|---|---|---|---|
| | | Gewicht | Winkel | Gewicht | Winkel | Gewicht | Winkel |
| 2 | VA-Blech 3 mm | 1050 g | 90° | 1040 g | 90, 3° | 1070 g | 89° |
| 3 | Alu-Blech 2 mm | 265 g | 90° | 255 g | 93° | - | - |
| 4 | VA-Blech 1 mm | 50 g | 90° | 48 g | 91° | - | - |
| 5 | Stahlblech 4 mm | 950 g | 90° | 920 g | 92° | 960 g | 89° |

Der vorgegebene Kantwinkel betrug wiederum 90°.

Anhand der in der obigen Tabelle aufgeführten Ergebnisse der Gewichts- und Winkelmessungen und der ermittelten Differenz des Istwertes zum Sollwert des Biegewinkels in Abhängigkeit vom Gewicht des Bleches kann der Korrekturfaktor ermittelt werden, so dass durch gezieltes Überbiegen oder Unterbiegen des Bleches die unterschiedliche Blechdicken und die zu erwartende Rückfederung ausgeglichen werden können.

In diesem Zusammenhang ist anzumerken, dass bewusst einfache Beispiele ausgewählt wurden, um den Erfindungsgedanken zu veranschaulichen. Von dem Erfindungsgedanken sind selbstverständlich auch Anwendungen umfasst, bei denen die Steuerung der Maschine mit Hilfe von weiteren Parametern erfolgt und die Ermittlung eines Korrekturfaktors oder Korrekturprogramms wesentlich komplizierter ist. Gedacht ist dabei auch an Anwendungen, wobei in die Berechnung des Verformungswegs für einen finalen Biegevorgang die Ergebnisse von Kraftmessungen mit einfließen, wenn beispielsweise über Kraftmessgeräte zusätzlich die Rückfederung gemessen wird, oder Anwendungen, bei denen beispielsweise der Zustellhub, die Presskraft und die Geschwindigkeit in Abhängigkeit von den gemessenen Blechgewichten und Biegewinkeln zur Ermittlung des Korrekturfaktors bzw. Korrekturprogramms variiert werden, um ein winkelgenaues Abkanten oder Biegen zu ermöglichen.

## Patentansprüche

1. Verfahren zum winkelgenauen Abkanten oder Biegen von Blechen (3), wobei der Abkant- oder Biegevorgang auf einer konventionellen CNC-gesteuerten Maschine zur Blechbearbeitung durchgeführt wird, mit den Schritten:
a) Auswiegen mindestens eines ersten zu bearbeitenden Bleches (3),
b) Abkanten oder Biegen des Bleches (3) unter Verwendung vorgegebener Maschinenparameter,
c) Bestimmung des Biegewinkels,
d) Eingeben oder Übernehmen des gefundenen Wertes für den Biegewinkel zusammen mit den vorgegebenen Maschinenparametern und dem Gewicht des Bleches (3) in Relation zu einem vorgegebenen Biegewinkel in ein Steuerprogramm zur Bestimmung von korrigierten Maschinenparametern für eine Korrekturbiegung,
e) Bestimmung eines Korrekturfaktors bzw. eines Korrekturprogramms für den Abkant- oder Biegevorgang anhand der gemessenen Biegewinkel in Abhängigkeit von den Gewichten der jeweiligen Bleche (3), wobei die Differenz zwischen dem gemessenen tatsächlichen Biegewinkel und dem vorgegebenen Biegewinkel der Berechnung des Verformungsweges für einen nachfolgenden Biegevorgang in einer Serienfertigung zugrunde gelegt wird,
f) Serienfertigung von abgekanteten oder gebogenen Blechteilen, wobei die zu bearbeitenden Bleche (3) zunächst gewogen und anschließend unter Heranziehung des ermittelten Korrekturfaktors bzw. Korrekturprogramms abgekantet oder gebogen werden.

2. Verfahren nach Anspruch 1,
**dadurch gekennzeichnet, dass** nach Schritt d) in einem zusätzlichen Schritt die Schritte a) bis d) mit einem weiteren Blech (3) wiederholt werden.

3. Verfahren nach Anspruch 2,
**dadurch gekennzeichnet, dass** das mindestens eine weitere Blech (3) ein unterschiedliches Gewicht aufweist.

4. Verfahren nach Anspruch 1,
**dadurch gekennzeichnet, dass** nach Schritt d) eine Korrekturbiegung durchgeführt wird und der bei der Korrekturbiegung ermittelte Biegewinkel zusammen mit den bei der Korrekturbiegung eingestellten Maschinenparametern zur Bestimmung von korrigierten Maschinenparametern für eine Korrekturbiegung herangezogen werden.

5. Verfahren nach einem der Ansprüche 1 bis 4,
**dadurch gekennzeichnet, dass** die Messung des Biegewinkels mit Hilfe eines manuell zu bedienenden konventionellen Winkelmessers, mit Hilfe eines optischen Messstrahls, über Abstandssensoren oder mit Hilfe von lasergestützten Biegewinkelmessgeräten erfolgt.

6. Verfahren nach einem der Ansprüche 1 bis 4,
**dadurch gekennzeichnet, dass** die Messung des Biegewinkels mit Hilfe eines in die Biegemaschine integrierten oder mit der Biegemaschine kombinierten Messsystems erfolgt, wobei die Winkelmessung mit Hilfe eines optischen Messstrahls, über Abstandssensoren oder mit Hilfe von lasergestützten Biegewinkelmessgeräten erfolgt.

7. Verfahren nach einem der Ansprüche 1 bis 4,
**dadurch gekennzeichnet, dass** die in den Schritten c) bis e) ermittelten Werte und Maschinenparameter in ein Steuerprogramm für ein vollautomatisches Biegesystem eingegeben oder von diesem übernommen werden und die Bestimmung des Korrekturfaktors bzw. Korrekturprogramms über das Steuerprogramm erfolgt.

8. Verfahren nach einem der Ansprüche 1 bis 7,
**dadurch gekennzeichnet, dass** das Steuerprogramm Teil der Maschinensteuerung der CNC-gesteuerten Maschine zur Blechbearbeitung ist.

9. Verfahren nach Anspruch 8,
**dadurch gekennzeichnet, dass** in die CNC-gesteuerte Maschine zur Blechbearbeitung eine Waage integriert ist, die mit dem Steuerprogramm verbunden ist und mit diesem kommuniziert.

10. Verfahren nach Anspruch 9,
**dadurch gekennzeichnet, dass** in die CNC-gesteuerte Maschine zur Blechbearbeitung zusätzlich ein Winkelmessgerät integriert ist, das zusammen mit der Waage mit dem Steuerprogramm verbunden ist und mit diesem kommuniziert.

11. Verfahren nach einem der Ansprüche 1 bis 10,
**dadurch gekennzeichnet, dass** die CNC-gesteuerte Maschine zur Blechbearbeitung Teil einer vollautomatischen Anlage zur Blechbearbeitung ist, wobei die Anlage einen Roboter für die Zuführung der zu bearbeitenden Blechteile umfasst, wobei in den Roboter eine Waage zum Auswiegen der Blechteile integriert ist, die mit dem Steuerprogramm der CNC-gesteuerten Maschine verbunden ist und mit diesem kommuniziert.

12. Vorrichtung zum winkelgenauen Abkanten oder Biegen von Blechen, wobei die Vorrichtung eine konventionelle CNC-gesteuerte Maschine zur Blechbearbeitung umfasst, **dadurch gekennzeichnet, dass** die CNC-gesteuerte Maschine zur Blechbearbeitung ein Steuerprogramm zur Steuerung der Maschine umfasst, wobei das Steuerprogramm anhand von Daten von vergleichenden Gewichts- und Winkelmessungen an mindestens einem zu bearbeitendem Blech (3) einen Korrekturfaktor bzw. ein Korrekturprogramm für ein winkelgenaues Abkanten oder Biegen von Blechen (3) für eine Serienfertigung bestimmt.

13. Vorrichtung nach Anspruch 12,
**dadurch gekennzeichnet, dass** die Vorrichtung eine Waage zum Auswiegen der zu bearbeitenden Bleche (3) umfasst, wobei die Waage mit dem Steuerprogramm zur Steuerung der Maschine verbunden ist und direkt mit diesem kommuniziert.

14. Vorrichtung nach Anspruch 12 oder 13,
**dadurch gekennzeichnet, dass** die Vorrichtung ein Winkelmessgerät umfasst, wobei das Winkelmessgerät mit dem Steuerprogramm zur Steuerung der Maschine verbunden ist und direkt mit diesem kommuniziert.

15. Vorrichtung nach einem der Ansprüche 12 bis 14,
**dadurch gekennzeichnet, dass** die Vorrichtung ein Kraftmessgerät umfasst, wobei das Kraftmessgerät mit dem Steuerprogramm zur Steuerung der Maschine verbunden ist und direkt mit diesem kommuniziert.

## Claims

1. A method for angle-precise folding or bending of sheet metals (3), wherein the folding or bending operation is carried out on a conventional CNC-controlled machine for sheet metal working, comprising the steps:
a) weighing at least one first sheet metal (3) to be processed,
b) folding or bending the sheet metal (3) using prespecified machine parameters,
c) determining the bending angle,
d) entering or taking over the value found for the bending angle together with the prespecified machine parameters and the weight of the sheet metal (3) in relation to a prespecified bending angle into a control program for determining corrected machine parameters for a correction bending,
e) determining a correction factor and/or a correction program for the folding or bending operation using the measured bending angles in dependence of the weights of the respective sheet metals (3), wherein the difference between the measured actual bending angle and the prespecified bending angle is used as the basis for calculating the deformation path for a subsequent bending operation in a series production,
f) series production of folded or bent sheet metal parts, wherein the sheet metals (3) to be processed are first weighed and then folded or bent using the correction factor and/or correction program determined.

2. The method according to claim 1, **characterized in that** after step d), steps a) to d) are repeated with a further sheet metal (3) in an additional step.

3. The method according to claim 2, **characterized in that** the at least one further sheet metal (3) has a different weight.

4. The method according to claim 1, **characterized in that** after step d), a correction bending is performed and the bending angle determined at the correction bending is used together with the machine parameters set at the correction bending to determine corrected machine parameters for a correction bending.

5. The method according to one of claims 1 to 4, **characterized in that** the measurement of the bending angle is carried out with the aid of a manually operated conventional protractor, with the aid of an optical measuring beam, via distance sensors or with the aid of laser-supported bending angle measuring devices.

6. The method according to one of claims 1 to 4, **characterized in that** the measurement of the bending angle is carried out with the aid of a measuring system integrated in the bending machine or combined with the bending machine, wherein the angle measurement is carried out with the aid of an optical measuring beam, via distance sensors or with the aid of laser-supported bending angle measuring devices.

7. The method according to one of claims 1 to 4, **characterized in that** the values and machine parameters determined in steps c) to e) are entered into a control program for a fully automated bending system or taken over from it and the determination of the correction factor and/or correction program is carried out via the control program.

8. The method according to one of claims 1 to 7, **characterized in that** the control program is a part of the machine controller of the CNC-controlled machine for sheet metal working.

9. The method according to claim 8, **characterized in that** a scale, which is connected to and communicates with the control program, is integrated in the CNC-controlled machine for sheet metal working.

10. The method according to claim 9, **characterized in that** an angle measuring device, which - together with the scale - is connected to the control program and communicates with it, is additionally integrated in the CNC-controlled machine for sheet metal working.

11. The method according to one of claims 1 to 10, **characterized in that** the CNC-controlled machine for sheet metal working is part of a fully automated plant for sheet metal working, wherein the plant comprises a robot for feeding the sheet metal parts to be processed, wherein a scale for weighing the sheet metal parts is integrated in the robot, said scale being connected to the control program of the CNC-controlled machine and communicating with it.

12. A device for angle-precise folding or bending of sheet metals, wherein the device comprises a conventional CNC-controlled machine for sheet metal working, **characterized in that** the CNC-controlled machine for sheet metal working comprises a control program for controlling the machine, wherein the control program determines a correction factor and/or a correction program for angle-precise folding or bending of sheet metals (3) for series production on the basis of data from comparative weight and angle measurements on at least one sheet metal (3) to be processed.

13. The device according to claim 12, **characterized in that** the device comprises a scale for weighing the sheet metals (3) to be processed, wherein the scale is connected to and directly communicates with the control program for controlling the machine.

14. The device according to claim 12 or 13, **characterized in that** the device comprises an angle measuring device, wherein the angle measuring device is connected to and directly communicates with the control program for controlling the machine.

15. The device according to one of claims 12 to 14, **characterized in that** the device comprises a force measuring device, wherein the force measuring device is connected to and directly communicates with the control program for controlling the machine.

## Revendications

1. Procédé de pliage ou de cintrage de tôles (3) à précision angulaire, le processus de pliage ou de cintrage étant effectué sur une machine d'usinage de tôles à commande numérique classique, avec les étapes :
a) pesée d'au moins une première tôle (3) à usiner,
b) pliage ou cintrage de la tôle (3) avec utilisation de paramètres de machine prescrits,
c) définition de l'angle de cintrage,
d) entrée ou prise en charge de la valeur trouvée pour l'angle de cintrage, conjointement avec les paramètres de machine prescrits et le poids de la tôle (3) en relation avec un angle de cintrage prescrit, dans un programme de commande pour la définition de paramètres de machine corrigés pour un cintrage de correction,
e) définition d'un facteur de correction ou respectivement d'un programme de correction pour le processus de pliage ou de cintrage à l'aide des angles de cintrage mesurés en fonction des poids des tôles (3) respectives, la différence entre l'angle de cintrage effectif mesuré et l'angle de cintrage prescrit servant de base au calcul de la course de déformation pour un processus de cintrage suivant dans une fabrication en série,
f) fabrication en série de parties de tôles pliées ou cintrées, les tôles (3) à usiner étant d'abord pesées et puis pliées ou cintrées en faisant appel au facteur de correction ou respectivement programme de correction déterminé.

2. Procédé selon la revendication 1, **caractérisé en ce que**, après l'étape d), dans une étape supplémentaire, les étapes a) à d) sont répétées avec une autre tôle (3).

3. Procédé selon la revendication 2, **caractérisé en ce qu'**au moins une autre tôle (3) présente un poids différent.

4. Procédé selon la revendication 1, **caractérisé en ce que**, après l'étape d), un cintrage de correction est effectué, et il est fait appel à l'angle de cintrage déterminé lors du cintrage de correction conjointement avec les paramètres de machine réglés lors du cintrage de correction pour la définition de paramètres de machine corrigés pour un cintrage de correction.

5. Procédé selon l'une des revendications 1 à 4, **caractérisé en ce que** la mesure de l'angle de cintrage s'effectue à l'aide d'un rapporteur classique devant être utilisé manuellement, à l'aide d'un faisceau de mesure optique, via des capteurs de distance ou à l'aide d'appareils de mesure d'angle de cintrage assistés par laser.

6. Procédé selon l'une des revendications 1 à 4, **caractérisé en ce que** la mesure de l'angle de cintrage s'effectue à l'aide d'un système de mesure intégré dans la machine de cintrage ou combiné avec la machine de cintrage, la mesure d'angle s'effectuant à l'aide d'un faisceau de mesure optique, via des capteurs de distance ou à l'aide d'appareils de mesure d'angle de cintrage assistés par laser.

7. Procédé selon l'une des revendications 1 à 4, **caractérisé en ce que** les valeurs et paramètres de machine déterminés dans les étapes c) à e) sont entrés dans un programme de commande pour un système de cintrage entièrement automatique ou sont pris en charge par celui-ci, et la définition du facteur de correction ou respectivement du programme de correction s'effectue via le programme de commande.

8. Procédé selon l'une des revendications 1 à 7, **caractérisé en ce que** le programme de commande fait partie de la commande de machine de la machine à commande numérique pour l'usinage des tôles.

9. Procédé selon la revendication 8, **caractérisé en ce que**, dans la machine à commande numérique pour l'usinage des tôles, il est intégré une balance qui est connectée au programme de commande et qui communique avec celui-ci.

10. Procédé selon la revendication 9, **caractérisé en ce que**, dans la machine à commande numérique pour l'usinage des tôles, il est intégré en plus un appareil de mesure d'angle qui, conjointement avec la balance, est connecté au programme de commande et qui communique avec celui-ci.

11. Procédé selon l'une des revendications 1 à 10, **caractérisé en ce que** la machine à commande numérique pour l'usinage des tôles fait partie d'une installation entièrement automatique d'usinage des tôles, l'installation comprenant un robot pour l'acheminement des parties de tôles à usiner, une balance destinée à peser les parties de tôle étant intégrée dans le robot et étant connectée au programme de commande de la machine à commande numérique et communiquant avec celui-ci.

12. Dispositif de pliage ou de cintrage de tôles à précision angulaire, le dispositif comprenant une machine d'usinage de tôles à commande numérique classique, **caractérisé en ce que** la machine à commande numérique d'usinage de tôles comprend un programme de commande destiné à la commande de la machine, le programme de commande définissant, à l'aide de données de mesures de poids et d'angle comparatives sur au moins une tôle (3) à usiner, un facteur de correction ou respectivement un programme de correction pour un pliage ou cintrage de tôles (3) à précision angulaire pour une fabrication en série.

13. Dispositif selon la revendication 12, **caractérisé en ce que** le dispositif comprend une balance destinée à peser les tôles à usiner (3), la balance étant connectée au programme de commande de la machine destiné à la commande de la machine et communiquant directement avec celui-ci.

14. Dispositif selon la revendication 12 ou 13, **caractérisé en ce que** le dispositif comprend un appareil de mesure d'angle, l'appareil de mesure d'angle étant connecté au programme de commande destiné à la commande de la machine et communiquant directement avec celui-ci.

15. Dispositif selon l'une des revendications 12 à 14, **caractérisé en ce que** le dispositif comprend un dynamomètre, le dynamomètre étant connecté au programme de commande destiné à la commande de la machine et communiquant directement avec celui-ci.
